# EUROPEAN PATENT APPLICATION

(11) **EP 1 529 499 A2**
(43) Date of publication of application: **11.05.2005**
(21) Application number: 04105480.0
(22) Date of filing: 03.11.2004
(51) Int. Cl.: A61C 8/00, A61C 7/14

(54) **Osteogenic support device for orthodontic treatment**

(30) Priority: 07.11.2003 KR 2003078813 T
(71) Applicant: Kyung, Hee Moon, Susung Gu, Taegu (KR)
(72) Inventor: Kyung, Hee Moon, Susung Gu, Taegu (KR)
(74) Representative: Wingfield, Anne

(57) **Abstract**

An osteogenic support device (**10**) for an orthodontic treatment comprises a platform (**12**) defined by a top side (**14**), a bottom side (**28**) and an outer periphery (**18**) with a lower projection (**20**) having an end 22 that extends from the bottom side (**16**) to become pierced in an osteogenic jaw bone structure. An extension head (**24**) having a top surface (**26**) and a bottom surface (**28**) so the top surface (**26**) is substantially recessed to form a top groove (**30**) having side walls (**32**) and bed surface (**34**) across the head (**24**) where the bed surface (**34**) is substantially perpendicular to the side walls (**32**). The bottom surface (**28**) is recessed to form a first bottom groove (**36**), and a connector (**40**) linking a central portion (**42**) of the top side (**14**) to a central portion (**44**) of the bottom surface (**28**) in adjacency to the first bottom groove (**36**).

## Description

### CLAIMING FOREIGN PRIORITY

The applicant claims and requests a foreign priority, through the Paris Convention for the Protection of Industry Property, based on a patent application filed in the Republic of Korea (South Korea) with the filing date of November 7, 2003, with the application number 10-2003-0078813, by the applicant. (See the Attached Declaration)

### BACKGROUND OF THE INVENTION

The present invention relates to an orthodontic treatment device. More particularly, the present invention relates to an improved osteogenic support device for an orthodontic treatment enabling aerial or three-dimensional displacement of target teeth being treated for orthodontic purposes.

As is increasingly known in the field of orthodontic treatments, a jaw bone is used to apply an extra force to teeth of an orthodontic patient. That is, a screw is pierced in the jaw bone for a limited time period so that the head of the pierced screw is wire-connected to brackets attached on teeth to provide an additional force to the target teeth of an orthodontic patient.

When an additional force is required for a desired teeth arrangement, a tiny piece of hygienic nailing device such as a hygienic screw is planted in a jaw bone structure of the orthodontic patient to provide an extra strain to the teeth. Here, an extra wire is hooked up both on an exposed side portion of the hygienic piece planted in the patient's jaw bone and on the base wire that retains each bracket on the teeth.

A conventional hygienic screw is disclosed in Korean Utility Model No. 20-0233786 and Korean Utility Model No. 20-0249419 where the screw with a head part and a threaded part is provide to prevent the orthodontic wire from slipping down onto the gum of an orthodontic patient and from subsequent gum irritation. A disadvantage of the prior art is that it is relatively difficult to apply an angular wire such as rectangular wire for orthodontic treatment. Another disadvantage is that the screw application limits a displacement of force to horizontal and vertical movements, that is, to two dimensional tooth movements.

### SUMMARY OF THE INVENTION

The present invention is contrived to overcome the conventional disadvantages. Accordingly, it is an object of the present invention to provide an osteogenic support device for an orthodontic treatment enabling aerial or three-dimensional displacement of target teeth being treated for orthodontic purposes. Another object is to controllably triple the orthodontic treatment force by enabling a simultaneous application of a wire, an elastic band and an additional aid such as a hook, thereby improving efficiency of orthodontic treatment.

To achieve these and other objects, the osteogenic support device for an orthodontic treatment according to the present invention comprises a platform defined by a top side, a bottom side and an outer periphery. A lower projection having an end extends from the bottom side of the platform so as to become pierced in an osteogenic jaw bone structure of an orthodontic patient. An extension head having a top surface and a bottom surface, and the top surface is substantially recessed to form a top groove across the head. The top groove is defined by side walls and a bed surface, with the bed surface substantially perpendicular to each of the side walls. The bottom surface of the extension head is recessed to form a first bottom groove. A connector linking a central portion of the top side of the platform to a central portion of the bottom surface of the head in adjacency to the first bottom groove.

The bottom surface of the extension head is further recessed to form a second bottom groove so that the bottom grooves are partitioned by the connector. Here, the bottom grooves are substantially parallel to each other and to the top groove. It is also preferred that the bottom grooves are each surfaced in a dome format. A substantially rectangular wire is selectively provided to fit in the top groove. The extension head is holed from the side walls through an outer periphery of the extension head to form through-holes. The through-holes are each substantially perpendicular to the top groove. The lower projection is substantially threaded. The connector is cylindrical in shape.

Advantages of the osteogenic support device for an orthodontic treatment according to the present invention are numerous in that: (1)the bottom grooves parallel to the top groove enables aerial or three-dimensional displacement of target teeth being treated for orthodontic purposes by providing stable and sufficient seats for a rectangular wire and a rubber band, thereby improving efficiency of orthodontic treatment; (2) the osteogenic support device combines into the aerial or three-dimensional force the top groove for receiving the rectangular wire, bottom grooves for being hooked by the rubber band and the holes for allowing application of an additional restraining aid such as a hook, thereby generating manageably enhanced orthodontic force for optimal orthodontic treatment; and (3) the top groove, bottom grooves and holes in the support device are formed in a supplemental format such that an orthodontic specialist can easily elect and apply respective merits depending on orthodontic patients and treatment requirements, thereby maximizing product reliability.

Although the present invention is briefly summarized, the fuller understanding of the invention can be obtained by the following drawings, detailed description and appended claims.

### BRIEF DESCRIPTION OF DRAWINGS

These and other features, aspects and advantages of the present invention will become better understood with reference to the accompanying drawings, wherein:
FIGS. 1 and 2 are perspective views showing an osteogenic support device for an orthodontic treatment according to the present invention;
FIG. 3 is a lengthwise cross-section of FIG. 1;
FIG. 4 is a perspective view showing a wire application of the present invention; and
FIG. 5 is a view showing application of the present invention.

### DETAILED DESCRIPTION OF THE PREFERRED EMBODIMENTS

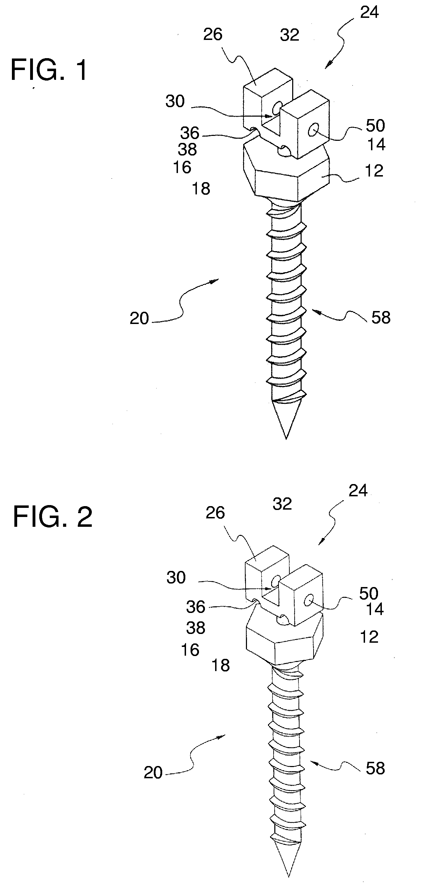

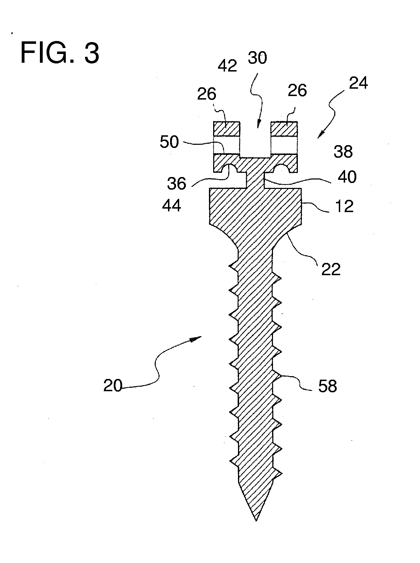

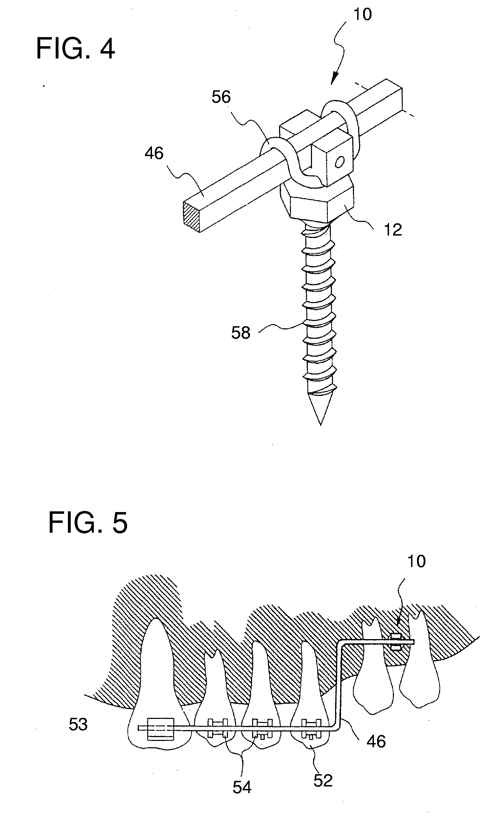

FIGS. 1 and 2 each show an osteogenic support device 10 for an orthodontic treatment according to the present invention where a screw threading direction differentiates FIG. 1 from FIG. 2. FIG. 3 show a lengthwise cross-section of FIG. 1 to detail construction of the osteogenic support device **10**. FIGS. 4 and 5 show each an orthodontic application of the support device **10**.

As shown therein, the osteogenic support device **10** for an orthodontic treatment comprises a platform **12** defined by a top side **14,** a bottom side **16** and an outer periphery **18**. Here, a lower projection **20** having an end 22 is provided to extend from the bottom side **16** of the platform **12** so as to become pierced in an osteogenic jaw bone structure of an orthodontic patient. The osteogenic support device **10** further comprises an extension head **24** having a top surface **26** and a bottom surface **28** where the top surface **26** is substantially recessed to form a top groove **30** across the head **24** where the top groove **30** is defined by side walls **32** and a bed surface **34**. For a better performance, the bed surface **34** is substantially perpendicular to each of the side walls **32.**

In this construction, the bottom surface **28** of the extension head **24** is slightly recessed to form a first bottom groove **36**. The support device **10** also comprises a connector **40** linking a central portion **42** of the top side **14** of the platform **12** to a central portion **44** of the bottom surface **28** of the head **24** in adjacency to the first bottom groove **36**. Selectively, the bottom surface **28** of the extension head **24** may be further recessed to form a second bottom groove **38** so that the bottom grooves **36, 38** become partitioned by the connector **40.**

It is preferred that the bottom grooves **36, 38** are substantially parallel to each other. Selectively, the bottom grooves **36, 38** are substantially parallel to the top groove **30.** The bottom grooves **36, 38** are each surfaced in a dome format across the bottom surface **28.**

For a better performance, the osteogenic support device **10** further comprises a substantially rectangular wire **46** to fit in the top groove **30** whereas the extension head **24** is holed from the side walls **32** through an outer periphery **48** of the extension head **24** to form through-holes **50**. The through-holes **50** are each substantially perpendicular to the top groove **30**. An additional aid such as a tension spring and elastic hook may be employed to become hooked in the through-holes **50** for additional force being applied to the target teeth **52.** Meanwhile, the lower projection **20** is substantially threaded to either right or left direction to form right or left threads **58**, and the connector **40** is cylindrical in shape to allow a source for an additional force that can be further applied to the target teeth **52**.

In order to prepare application of the support device **10** to an orthodontic treatment, brackets **54** are detachably glued on each outer surface of teeth **52** and an orthodontic wire **46** is aligned along the brackets **54** to become attached to the brackets **54** so as to generate strain for teeth realignment. When a base wire application is not sufficient to generate teeth correction, the osteogenic support device **10** is selectively utilized in conjunction with the orthodontic wire **46** in a rectangular formation. Here, the orthodontic wire **46** may have elasticity within allowance of the orthodontic treatment requirements.

For a direct application of the osteogenic support device **10** to the orthodontic treatment, the device **10** with a screw formation is partially planted in upper or lower jaw bone through a selected area of a gum **53** of the patient during the orthodontic treatment. To improve engagement between the wire **46** and the extension head **24** there may be provided an elastic member **56** selected from a rubber ring, a plastic string, a fabric string and other string type connection materials. So the combination of the rectangular wire **46** and the rubber ring **56** enables facilitates an aerial or three-dimensional control of the target teeth **52.** Specifically, a three-dimensional displacement by the application of the support device **10** is implemented in three-way combination a first displacement along a teeth alignment (**x**), a second displacement along a vertical alignment (**y**) perpendicular to the teeth alignment, and a third displacement along a cross-teeth alignment (**z**) perpendicular to the teeth and vertical alignments, thereby realizing aerial or three-dimensional teeth displacement.

The lower projection **20** is substantially threaded to facilitate its planting in the osteogenic jaw bone structure through the gum **53**. Also, it is preferred that the lower projection **20** ranges between about 5.0 mm and 8.0 mm in length. The platform **12** is formed in a multi-sided alignment. For example, the outer periphery **18** of the platform **12** may be formed in a six-sided peripheral alignment to facilitate the partial planting of the osteogenic support device **10** in a target portion of the orthodontic patient's jaw bone structure. Selectively, the outer periphery **18** of the platform **12** may be substantially surface-piled to facilitate manipulation of the support device **10** to plant the lower projection **20** in the jaw bone structure and remove the planting after completion of the orthodontic treatment.

As discussed above, an advantage of the osteogenic support device **10** is that the bottom grooves **36, 38** parallel to the top groove **30** enables aerial or three-dimensional displacement of target teeth being treated for orthodontic purposes by providing stable and sufficient seats for the rectangular wire **46** and the rubber band **56**, thereby improving efficiency of orthodontic treatment.

In addition, the osteogenic support device **10** combines into the aerial or three-dimensional force the top groove **30** for receiving the rectangular wire **46**, bottom grooves **36, 38** for being hooked by the rubber band **56** and the holes **50** for allowing application of an additional restraining aid such as a hook, thereby generating manageably enhanced orthodontic force for optimal orthodontic treatment. Further, the top groove **30**, bottom grooves **36, 38** and holes **50** in the support device **10** are formed in a supplemental format such that an orthodontic specialist can easily elect and apply respective merits depending on orthodontic patients and treatment requirements, thereby maximizing product reliability.

Although the invention has been described in considerable detail with reference to certain preferred versions thereof, other versions are possible by converting the aforementioned construction. Therefore, the scope of the invention shall not be limited by the specification detailed above and the appended claims.

## Claims

1. An osteogenic support device for an orthodontic treatment, comprising:
a) a platform defined by a top side, a bottom side and an outer periphery, wherein a lower projection having an end extends from the bottom side of the platform so as to become pierced in an osteogenic jaw bone structure of an orthodontic patient;
b) an extension head having a top surface and a bottom surface, wherein the top surface is substantially recessed to form a top groove across the head, wherein the top groove is defined by side walls and a bed surface, wherein the bed surface is substantially perpendicular to each of the side walls, wherein the bottom surface of the extension head is recessed to form a first bottom groove; and
c) a connector linking a central portion of the top side of the platform to a central portion of the bottom surface of the head in adjacency to the first bottom groove.

2. The osteogenic support device of claim 1 wherein the bottom surface of the extension head is further recessed to form a second bottom groove so that the bottom grooves are partitioned by the connector.

3. The osteogenic support device of claim 2 wherein the bottom grooves are substantially parallel to each other.

4. The osteogenic support device of claim 3 wherein the bottom grooves are substantially parallel to the top groove.

5. The osteogenic support device of claim 4 wherein the bottom grooves are each surfaced in a dome format.

6. The osteogenic support device of claim 1 further comprising a substantially rectangular wire to fit in the top groove.

7. The osteogenic support device of claim 1 wherein the extension head is holed from the side walls through an outer periphery of the extension head to form through-holes.

8. The osteogenic support device of claim 7 wherein the through-holes are each substantially perpendicular to the top groove.

9. The osteogenic support device of claim 1 wherein the lower projection is substantially threaded.

10. The osteogenic support device of claim 1 wherein the connector is cylindrical in shape.
